# EUROPEAN PATENT APPLICATION

(11) **EP 1 878 781 A1**
(43) Date of publication of application: **16.01.2008**
(21) Application number: 06729528.7
(22) Date of filing: 20.03.2006
(51) Int. Cl.: C10G 25/00, B01J 20/06, B01J 20/28, B01J 20/30, C01B 3/38, C10G 29/04, C10G 29/06, C10G 29/16, C10L 3/10, H01M 8/06

(54) **DESULFURIZING AGENT AND METHOD OF DESULFURIZATION WITH THE SAME**

(30) Priority: 24.03.2005 JP 2005085230; 13.04.2005 JP 2005115597
(71) Applicant: IDEMITSU KOSAN CO., LTD., Tokyo 100-8321 (JP)
(72) Inventor: SAITO, Kazuhito, Chiba, 2990293 (JP); KATSUNO, Hisashi, Chiba, 2990293 (JP)
(74) Representative: HOFFMANN EITLE
(86) International application number: PCT/JP2006/305560
(87) International publication number: WO 2006/101079

(57) **Abstract**

The invention provides a desulfurizing agent which attains effective removal of sulfur from a hydrocarbon feedstock and/or an oxygen-containing hydrocarbon feedstock so as to attain a considerably low sulfur level and which has a long service life; a process for producing hydrogen for fuel cells, which process includes steam-reforming, partial-oxidation-reforming, or autothermal-reforming of a hydrocarbon feedstock and/or an oxygen-containing hydrocarbon feedstock which has been desulfurized by use of the desulfurizing agent; a fuel cell system employing hydrogen produced through the process.

The desulfurizing agent for removing a sulfur compound from a hydrocarbon feedstock and/or an oxygen-containing hydrocarbon feedstock, the agent containing nickel, or a combination of nickel and copper, and silicon, and having a bulk density of 0.95 to 2.0 g/cm³, a pore volume of 0.10 to 0.40 mL/g, a micropore surface area of 100 to 250 m²/g, and an external surface area of 100 m²/g or less. The process for producing hydrogen for fuel cells employs the desulfurizing agent. The fuel cell system employs hydrogen produced through the process.

## Description

### Field of the Invention

The present invention relates to a desulfurizing agent, to a method for producing the desulfurizing agent, to a desulfurization method employing the desulfurizing agent, to a process for producing hydrogen for fuel cells, and to a fuel cell system employing hydrogen produced through the process. More particularly, the invention relates to a desulfurizing agent which attains effective removal of sulfur from a hydrocarbon feedstock and/or an oxygen-containing hydrocarbon feedstock so as to attain a considerably low sulfur level and which has a long service life; to a method for producing the desulfurizing agent; to a process for producing hydrogen for fuel cells including reforming a hydrocarbon feedstock and/or an oxygen-containing hydrocarbon feedstock which has been desulfurized by use of the desulfurizing agent; and to a fuel cell system employing hydrogen produced through the process.

### Background Art

In recent years, new energy-production techniques have attracted attention, from the standpoint of environmental issues, and among these techniques a fuel cell has attracted particular interest. The fuel cell converts chemical energy to electric energy through electrochemical reaction of hydrogen and oxygen, attaining high energy utilization efficiency. Therefore, extensive studies have been carried out on realization of fuel cells for civil use, industrial use, automobile use, etc. Fuel cells are categorized in accordance with the type of employed electrolyte, and, among others, phosphoric acid type, molten carbonate type, solid oxide type, and polymer electrolyte type have been known. With regard to hydrogen sources, studies have been conducted on methanol; liquefied natural gas predominantly containing methane; city gas predominantly containing natural gas; a synthetic liquid fuel produced from natural gas serving as a feedstock; and petroleum-derived hydrocarbon oils such as naphtha and kerosene.

Upon use (e.g., civil use or automobile use) of fuel cells, the aforementioned hydrocarbon oils, *inter alia,* petroleum-derived oils, are advantageously employed as hydrogen sources, since the hydrocarbons are in the form of liquid at ambient temperature and pressure, are easy to store and handle, and supply systems (e.g., gasoline stations and service stations) are well-furnished. However, hydrocarbon oils have a problematically higher sulfur content as compared with methanol and natural gas. When hydrogen is produced from the hydrocarbon oils, the hydrocarbon oils are generally processed through steam-reforming, partial-oxidation-reforming, or a similar reforming process, in the presence of a reforming catalyst. During such reforming processes, the aforementioned reforming catalyst is poisoned by sulfur content of the hydrocarbon oils. Therefore, the hydrocarbon oils must be desulfurized, from the viewpoint of service life of the catalyst, to the extent that the sulfur content is reduced to 0.2 ppm by mass or lower over a long period of time.
Meanwhile, for applications in which hydrogen is fed directly to automobiles, addition of an odorant to hydrogen is now under investigation for safety reasons. Thus, another key issue is that the level of sulfur compounds (i.e., odorants) contained in feedstock oil is reduced to as low a degree as possible.

Hitherto, a variety of desulfurization methods for petroleum-derived hydrocarbon have been studied. According to one known method, hydrocarbon is hydro-desulfurized by use of a hydrodesulfurization catalyst (e.g., Co-Mo/alumina or Ni-Mo/alumina) and a hydrogen sulfide adsorbent (e.g., ZnO) under ambient pressure to 5 MPa·G at 200 to 400°C. In this method, hydrodesulfurization is performed under severe conditions, to thereby remove sulfur in the form of hydrogen sulfide. When the method is employed, care must be taken for safety and the environment as well as for relevant laws such as the high-pressure gas safety law. Thus, the method is not preferred for producing hydrogen for small-scale dispersed fuel cells power plant. In other words, there is demand for a desulfurizing agent for producing hydrogen for fuel cells, the agent being able to desulfurize a fuel under a pressure lower than 1 MPa·G over a long period of time.
There has also been proposed a nickel-containing adsorbent, serving as a desulfurizing agent, for removing sulfur contained in fuel oil through adsorption under mild conditions (see, for example, Patent Documents 1 to 12). In addition, adsorbents containing nickel and copper, which are improved adsorbents, have also been proposed (see, for example, Patent Document 11 or 13).
However, the desulfurizing agents according to the above-disclosed techniques are not practically employed in terms of service life. Among others, the aforementioned adsorbents containing nickel and copper, having a low bulk density, must be employed in a large-scale desulfurizer, making practical use of the adsorbents difficult. In other words, when these adsorbents are employed in a standard-scale desulfurizer, effective desulfurization cannot be performed, which is also problematic.

[Patent Document 1]
Japanese Patent Publication (*kokoku*) No. 6-65602
[Patent Document 2]
Japanese Patent Publication *(kokoku)* No. 7-115842
[Patent Document 3]
Japanese Patent Application Laid-Open (kokai) No. 1-188405
[Patent Document 4]
Japanese Patent Publication (*kokoku*) No. 7-115843
[Patent Document 5]
Japanese Patent Application Laid-Open *(kokai)* No. 2-275701
[Patent Document 6]
Japanese Patent Application Laid-Open (kokai) No. 2-204301
[Patent Document 7]
Japanese Patent Application Laid-Open (kokai) No. 5-70780
[Patent Document 8]
Japanese Patent Application Laid-Open (kokai) No. 6-80972
[Patent Document 9]
Japanese Patent Application Laid-Open (kokai) No. 6-91173
[Patent Document 10]
Japanese Patent Application Laid-Open (kokai) No. 6-228570
[Patent Document 11]
Japanese Patent Application Laid-Open (kokai) No. 2001-279259
[Patent Document 12]
Japanese Patent Application Laid-Open (kokai) No. 2001-342465
[Patent Document 13]
Japanese Patent Application Laid-Open (kokai) No. 6-315628

### Disclosure of the Invention

### Problems to be Solved by the Invention

Under such circumstances, an object of the present invention is to provide a desulfurizing agent which attains effective removal of sulfur from a hydrocarbon feedstock and/or an oxygen-containing hydrocarbon feedstock so as to attain a considerably low sulfur level and which has a long service life. Another object of the invention is to provide a process for producing hydrogen for fuel cells, which process includes steam-reforming, partial-oxidation-reforming, or autothermal-reforming of a hydrocarbon feedstock and/or an oxygen-containing hydrocarbon feedstock which has been desulfurized by use of the desulfurizing agent. Still another object of the invention is to provide a fuel cell system employing hydrogen produced through the process. Particularly, an object of the invention is to provide a desulfurizing agent which attains effective removal of sulfur so as to attain a considerably low sulfur level, when employed in a fuel cell system equipped with a small-scale desulfurizer. Another object of the invention is to provide a desulfrization method employing the desulfurizing agent. Means for Solving the Problems

The present inventors have carried out extensive studies in order to attain the aforementioned objects, and have found that the objects can by attained by a desulfurizing agent which comprises nickel, or a combination of nickel and copper, and silicon, which has a bulk density, a pore volume, and a micropore surface area falling within specific ranges, and which has an external surface area equal to or less than a specific value. The present invention has been accomplished on the basis of this finding.
Accordingly, the present invention provides a desulfurizing agent, a desulfurization method, a process for producing hydrogen for fuel cells, and a fuel cell system as follows.
1. A desulfurizing agent for removing a sulfur compound from a hydrocarbon feedstock and/or an oxygen-containing hydrocarbon feedstock, characterized in that the agent comprises nickel, or a combination of nickel and copper, and silicon, and has a bulk density of 0.95 to 2.0 g/cm³, a pore volume of 0.10 to 0.40 mL/g, a micropore surface area of 100 to 250 m²/g, and an external surface area of 100 m²/g or less.
2. The desulfurizing agent as described in 1 above, which has a nickel content of 40 to 90 mass%.
3. The desulfurizing agent as described in 1 or 2 above, which has a copper content of 0.01 to 40 mass%.
4. The desulfurizing agent as described in any of 1 to 3 above, which has a silicon content, as reduced to SiO₂ (silica), of 50 mass% or less.
5. The desulfurizing agent as described in any of 1 to 4 above, wherein the hydrocarbon feedstock and/or oxygen-containing hydrocarbon feedstock is at least one species selected from among kerosene, light oil, liquefied petroleum gas (LPG), naphtha, gasoline, natural gas, and dimethyl ether.
6. A method for producing a desulfurizing agent which has a bulk density of 0.95 to 2.0 g/cm³, a pore volume of 0.10 to 0.40 mL/g, a micropore surface area of 100 to 250 m²/g, and an external surface area of 100 m²/g or less, the method comprising mixing an acidic solution or an acidic aqueous dispersion containing nickel or a combination of nickel and copper with a basic solution containing silicon, and allowing instant formation of precipitates.

7. The method for producing a desulfurizing agent as described in 6 above, wherein mixing of the acidic solution or acidic aqueous dispersion with the basic solution, and formation of the precipitates are performed in a reactor tube having an inner diameter of 3 to 100 mm.
8. A desulfurization method characterized by comprising desulfurizing a hydrocarbon feedstock and/or oxygen-containing hydrocarbon feedstock by use of a desulfurizing agent as recited in any of 1 to 5 above at -40 to 300°C.
9. A process for producing hydrogen for fuel cells, characterized in that the process comprises desulfurizing a hydrocarbon feedstock and/or oxygen-containing hydrocarbon feedstock by use of a desulfurizing agent as recited in any of 1 to 5 above and, subsequently, reforming the desulfurization product.
10. The process for producing hydrogen for fuel cells as described in 9 above, wherein reforming is performed through steam reforming, partial-oxidation reforming, or autothermal reforming.
11. The process for producing hydrogen for fuel cells as described in 9 or 10 above, wherein reforming is performed in the presence of a catalyst which is a ruthenium-based catalyst or a nickel-based catalyst.
12. The process for producing hydrogen for fuel cells as described in 11 above, wherein the catalyst employed in reforming has a carrier component which is at least one species selected from among manganese oxide, cerium oxide, and zirconium oxide.
13. A fuel cell system characterized by employing hydrogen produced through a process as recited in any of 9 to 12 above.

### Effects of the Invention

The desulfurizing agent according to the present invention has a large number of micropores which are effective in adsorbing sulfur, and a small number of pores other than the micropores that contribute to effective adsorption of sulfur. Therefore, sulfur-compound-adsorption capacity of the desulfurizing agent per unit volume is enhanced, whereby a small-scale desulfurizer employing the desulfurizing agent can be provided. According to the present invention, there can be provided a desulfurizing agent which attains effective removal of sulfur from a hydrocarbon feedstock and/or an oxygen-containing hydrocarbon feedstock so as to attain a considerably low sulfur level and which has a long service life; a method for producing the desulfurizing agent; and a process for producing hydrogen for fuel cells including reforming a hydrocarbon feedstock and/or an oxygen-containing hydrocarbon feedstock which has been desulfurized by use of the desulfurizing agent. According to the present invention, sulfur can be effectively removed to a considerably low sulfur level, particularly when a fuel cell system equipped with a small-scale desulfurizer is employed.

### Brief Description of the Drawings

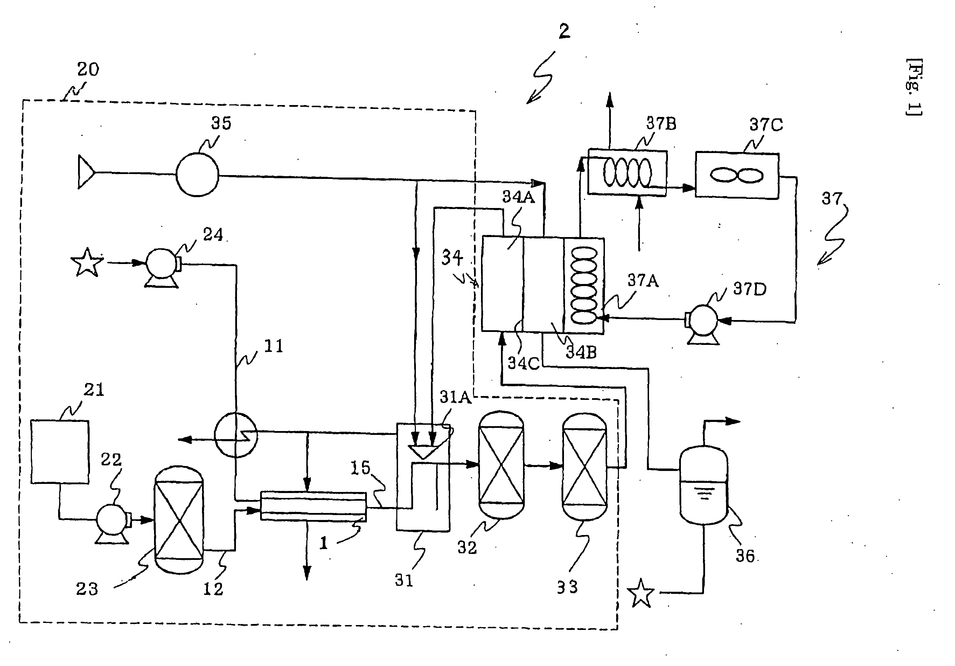

Fig. 1 shows a schematic diagram of an exemplary fuel cell system according to the present invention.

### Description of Reference Numerals

1: Carbureter
2: Fuel cell system
20: Hydrogen production system
21: Fuel tank
23: Desulfurizer
31: Reformer
32: CO converter
33: CO-selective oxidation furnace
34: Fuel cell stack
34A: Negative electrode
34B: Positive electrode
34C: Polymer electrolyte
36: Liquid/gas separator
37: Exhausted heat recovering apparatus
37A: Heat-exchanger
37B: Heat-exchanger
37C: Cooler

### Best Modes for Carrying Out the Invention

The desulfurizing agent of the present invention removes a sulfur compound from a hydrocarbon feedstock and/or an oxygen-containing hydrocarbon feedstock. The desulfurizing agent includes nickel, or a combination of nickel and copper, and silicon, and has a bulk density of 0.95 to 2.0 g/cm³, a pore volume of 0.10 to 0.40 mL/g, a micropore surface area of 100 to 250 m²/g, and an external surface area of 100 m²/g or less.
In the desulfurizing agent of the present invention, nickel plays a role in the removal of sulfur through adsorbing sulfur or reacting with sulfur to form a sulfide. Typical examples of the nickel component include nickel oxide, metallic nickel produced through reduction of nickel oxide, nickel carbonate, nickel nitrate, nickel chloride, nickel sulfate, and nickel acetate. The nickel component contained in the desulfurizing agent of the present invention preferably has a metallic nickel content of 60 mass% or more. When the metallic nickel content is 60 mass% or more, the desulfurizing agent can possess a large number of active sites on the surface thereof, resulting in particularly high desulfurization performance.
The nickel (Ni) content of the desulfurizing agent is preferably 40 to 90 mass% based on the total amount of the agent, preferably 60 to 85 mass%, more preferably 65 to 85 mass%. When the nickel content is 50 mass% or more, high desulfurization activity can be attained, whereas when the nickel content is 90 mass% or less, a sufficient amount of the catalyst carrier mentioned hereinbelow is ensured, thereby providing a sufficient surface area of the desulfurizing agent and preventing reduction in desulfurization performance.

In the desulfurizing agent of the present invention, an optionally included copper plays a role in enhancing dispersibility of nickel, preventing coking, and promoting adsorption of sulfur. The copper (Cu) content of the desulfurizing agent is preferably 0.01 to 40 mass% based on the total amount of the agent, more preferably 0.01 to 35 mass%, still more preferably 0.01 to 30 mass%. When the copper content is 0.01 to 40 mass%, the aforementioned effects of nickel cannot be impaired, whereby performance of the desulfurizing agent can be enhanced.
In addition, in the desulfurizing agent of the present invention, the total amount of Ni and Cu is preferably 50 to 90 mass% based on the total amount of the agent. When the total amount of Ni and Cu falls within the range, active sites required for desulfurization can be sufficiently provided, thereby attaining desired desulfurization performance.

Incorporation of silicon (silica) into the desulfurizing agent of the present invention facilitates molding of the desulfurizing agent and forms a microporous structure which is effective for desulfurization. In other words, silica-a carrier component-plays a role in enhancing dispersibility of nickel and copper and in forming micropores mentioned hereinbelow. The desulfurizing agent of the present invention preferably has a silicon content, as reduced to SiO₂ and based on the total amount of the desulfurizing agent, of 50 mass% or less, more preferably 10 to 40 mass%. When the silicon content is 50 mass% or less, nickel or a combination of nickel and copper can be contained in an amount effective for desulfurization. The desulfurizing agent of the present invention may also contain small amounts of other metallic components such as cobalt, iron, manganese, and chromium.

The desulfurizing agent of the present invention essentially has a bulk density of 0.95 to 2.0 g/cm³, preferably 1.1 to 1.8 g/cm³. As used herein, the term "bulk density" refers to a value derived through charging a desulfurizing agent into a container whose capacity (volume) is known through a predetermined method, and dividing the mass of the desulfurizing agent by the volume including intergranular space. When the bulk density is 0.95 g/cm³ or more, sulfur-compound-adsorption capacity per unit volume is enhanced, whereby a small-scale desulfurizer can be provided. The upper limit of the bulk density is generally 2.0 g/cm³.

The desulfurizing agent of the present invention essentially has a pore volume of 0.10 to 0.40 mL/g, preferably 0.15 to 0.40 mL/g. When the pore volume is 0.40 mL/g or less, the desulfurizing agent has a high density, thereby enhancing the sulfur-compound-adsorption capacity per unit volume, whereas when the pore volume is 0.10 mL/g or more, the number of effective pores satisfactorily increases, leading to enhanced desulfurization performance.
The desulfurizing agent of the present invention essentially has a micropore surface area of 100 to 250 m²/g and an external surface area of 100 m²/g or less, preferably a micropore surface area of 120 to 240 m²/g and an external surface area of 90 m²/g or less. The external surface area is more preferably 80 m²/g or less. When the micropore surface area is 100 m²/g or more, dispersibility of nickel supported on a carrier increases, which is effective for desulfurization.

Sulfur compounds are preferentially adsorbed by micropores and weakly adsorbed by portions other than micorpores. Since the desulfurizing agent of the present invention has a large micropore surface area and a non-effective external surface area as small as 100 m²/g or less, effective desulfurization can be attained. In other words, when the desulfurizing agent has an external surface area of 100 m²/g or less, density of the agent increases, whereby sulfur-compound adsorption capacity per unit volume is enhanced.
The desulfurizing agent of the present invention has a micropore surface area/external surface area ratio of 1 or more. Thus, the adsorption capacity can be enhanced, and the service life can be prolonged, whereby a small-scale desulfurizer can be provided. The micropore surface area/external surface area ratio is preferably 1.2 or more, more preferably 1.5 or more.

No particular limitation is imposed on the method for producing a desulfurizing agent having the aforementioned characteristics, and methods such as impregnation, co-precipitation, and kneading may be employed. Of these, the co-precipitation method is most preferred, since a desulfurizing agent having a bulk density of 0.95 g/cm³ or more can readily be produced.
The co-precipitate method will next be described in detail. In the co-precipitation method employed in the present invention, firstly, an acidic aqueous solution or an acidic aqueous dispersion containing a nickel source as an essential component and an optional copper source, and a basic aqueous solution containing a silicon source are prepared.
According to conventional co-precipitation methods, each of the acidic aqueous solution or aqueous dispersion and the thus-prepared basic aqueous solution is heated to about 50 to about 90°C; the two liquids are mixed, and the mixture is maintained at about 50 to about 90°C so as to complete reaction. When this approach is employed, pore volume and bulk density cannot be increased, and the attainable bulk density is at most about 0.9 g/cm³. In addition, the external surface area relatively increases to the effective micropore surface area.
In contrast, according to the present invention, the acidic aqueous solution or aqueous dispersion and the basic aqueous solution are simultaneously fed to a reactor tube, and precipitations are allowed to be instantly formed in the reactor tube. Through employment of such an approach (hereinafter may be referred to as "instant precipitation method"), a desulfurizing agent having the aforementioned characteristics can be produced. The reactor tube employed in the method may be a straight tube or a bent tube and preferably has an inner diameter of 3 to 100 mm. A static mixer may also be employed.

Similar to the aforementioned approach, there is an also effective approach in which the acidic aqueous solution or aqueous dispersion and the basic aqueous solution are simultaneously introduced to a small receptacle, and precipitations are allowed to be instantly formed. However, when the approach is employed, the formed precipitates and the solution remain in the receptacle after the process. When the newly added acidic aqueous solution or aqueous dispersion and basic aqueous solution are diluted by the remaining matter, instant formation of precipitation is inhibited, thereby failing to produce a desulfurizing agent having high bulk density. Therefore, it is essential that formed precipitates and solution remaining in the receptacle is continuously removed so as to prevent remaining of these materials, or that a sufficiently small receptacle is employed.
The desulfurizing agent of the present invention may be molded through any of generally employed molding methods. Among them, extrusion, tumbling granulation, or molding with granulation or crushing of a dried product is preferably employed. From the viewpoint of enhancing bulk density of the desulfurizing agent, compression molding is effective. However, when compression molding is employed, micropores which are effective for desulfurization reaction may be destructed, resulting in a decrease in micropore surface area and pore volume. When the micropore surface area and the pore volume decrease, dispersion of a metallic component such as nickel serving as an active site may be impaired, and the number of sulfur-compound-adsorption sites may decrease, resulting in impairment of desulfurization performance.

Hereinafter, there will be described in detail a method for producing a desulfurizing agent which is formed of a nickel-copper-on silica carrier and which has a bulk density of 0.95 g/cm³ or more, which is one preferred embodiment of the desulfurizing agent of the present invention.
Firstly, an acidic aqueous or an acidic aqueous dispersion containing a nickel source and a copper source, and a basic aqueous solution containing a silicon source are prepared. Examples of the nickel source contained in the acidic aqueous or acidic aqueous dispersion include nickel chloride, nickel nitrate, nickel sulfate, nickel acetate, nickel carbonate, and hydrates thereof. Examples of the copper source include copper chloride, copper nitrate, copper sulfate, copper acetate, and hydrates thereof.
No particular limitation is imposed on the silicon source contained in the basic aqueous solution, so long as the silicon source can be dissolved in an alkaline aqueous solution and forms silica through calcination. Examples of the silicon source include orthosilicic acid, metasilicic acid, sodium salts and potassium salts thereof, and water glass. The basic aqueous solution may optionally contain an inorganic salt such as an alkali metal carbonate or hydroxide.

Subsequently, the precipitates formed, through the aforementioned instant precipitation method, from the acidic aqueous solution or acidic aqueous dispersion and the basic aqueous solution are sufficiently washed, followed by performing solid-liquid separation. Alternatively, the formed precipitates are separated from the reaction mixture, followed by sufficiently washing. The thus-treated precipitates are dried through a conventional method at about 80 to about 150°C, and the thus-dried product is calcined preferably at 200 to 400°C, to thereby yield a desulfurizing agent in which metallic components are held on a silica carrier having micropores.

The desulfurizing agent of the present invention preferably has a hydrogen adsorption capacity of 0.15 mmol/g or more. When the hydrogen adsorption capacity is 0.15 mmol/g or more, a sufficient number of active sites required for desulfurization can be provided, leading to high desulfurization performance.
For reducing the desulfurizing agent produced through the aforementioned method so as to control the amount of metallic nickel and hydrogen adsorption capacity, a reduction method which is generally employed in the art is appropriately employed. In the production of hydrogen for fuel cells, the reduction treatment is performed just before the desulfurization step, or after completion of the desulfurizing agent production step. In the case where reduction is performed after production of the desulfurizing agent, the outermost surface of the desulfurizing agent is preferably oxidized (i.e., stabilized) with air, diluted oxygen, carbon dioxide, or a similar material. In use, the thus-stabilized desulfurizing agent is charged to a desulfurization reactor and, thereafter, must be reduced again. After reduction treatment, the desulfurizing agent is preferably maintained in inter gas or desulfurized kerosene.

No particular limitation is imposed on the hydrocarbon feedstock and/or oxygen-containing hydrocarbon feedstock to which the desulfurizing agent of the present invention is applied. Examples of the feedstock include kerosene, light oil, liquefied petroleum gas (LPG), naphtha, gasoline, natural gas, dimethyl ether, and mixtures thereof. Of these, kerosene and liquefied petroleum gas (LPG) are preferred as a feedstock to which the desulfurizing agent of the present invention is applied. Among kerosene species, kerosene of JIS No. 1 having a sulfur content of 80 ppm by mass or less is particularly preferred. The kerosene of JIS No. 1 is produced through distillation of crude oil under ambient pressure and desulfurizing the thus-yielded crude kerosene. Generally, the crude kerosene, having a high sulfur content, cannot serve as kerosene of JIS No. 1 and, therefore requires reduction of the sulfur content. In order to reduce sulfur content, desulfurization is preferably performed through hydro-refining desulfuriztion, which is generally carried out in the industry. The desulfurization catalyst employed in the desulfurization generally includes an alumina-based carrier and, supported on the carrier, a mixture, oxide, sulfide, etc. containing transition metal such as nickel, cobalt, molybdenum, and tungsten at appropriate proportions. Reaction conditions include, for example, a reaction temperature of 250 to 400°C, a pressure of 2 to 10 MPa·G, a hydrogen/oil mole ratio of 2 to 10, and a liquid hourly space velocity (LHSV) of 1 to 5 hr⁻¹.

No particular limitation is imposed on the desulfurization conditions under which a hydrocarbon feedstock and/or an oxygen-containing feedstock is desulfurized by use of the desulfurizing agent of the present invention, and the conditions may be appropriately selected in accordance with the properties of the feedstock. Generally, the desulfurization may be performed at -40 to 300°C. Specifically, when a hydrocarbon feedstock (e.g., kerosene of JIS No. 1) is caused to flow upward or downward for desulfurization in a desulfurization tower charged with the desulfurizing agent of the present invention in the liquid phase, desulfurization is performed at about 130 to about 230°C, ambient pressure to about 1 Mpa·G, and a liquid hourly space velocity (LHSV) of about 0.1 to about 100 hr⁻¹. In this case, a small amount of hydrogen may be co-present in accordance with needs. Through appropriate tuning the desulfurization conditions to fall within the aforementioned range, a hydrocarbon, for example, that having a sulfur content of 0.2 mass ppm or less can be yielded.

In the process of the present invention for producing hydrogen for fuel cells, the hydrocarbon feedstock and/or oxygen-containing hydrocarbon feedstock which has been desulfurized through the aforementioned procedure is subjected to steam reforming, partial-oxidation reforming, or autothermal reforming. More specifically, the feedstock is brought into contact with a steam reforming catalyst, a partial-oxidation reforming catalyst, or an autothermal reforming catalyst, to thereby produce hydrogen for fuel cells.
No particular limitation is imposed on the species of the reforming catalyst employed, and any catalysts may be appropriately selected from those conventionally known as a reforming catalyst for hydrocarbon. Examples of such reforming catalysts include a catalyst containing an appropriate carrier and, supported on the carrier, a noble metal such as nickel, zirconium, ruthenium, rhodium, or platinum. These metals supported on the carrier may be used singly or in combination of two or more species. Among these catalysts, a nickel-on-carrier (hereinafter referred to as nickel-based catalyst) and a ruthenium-on-carrier (hereinafter referred to as ruthenium-based catalyst) are preferred in that these catalysts can effectively prevent deposition of carbon during steam reforming, partial-oxidation reforming, or autothermal reforming.
The carrier of the reforming catalyst preferably contains manganese oxide, cerium oxide, zirconium oxide, etc. Such a carrier containing at least on member of the oxides is particularly preferred.

When a nickel-based catalyst is employed, the amount of nickel supported on the carrier is preferably 3 to 60 mass% on the basis of the amount of carrier. When the nickel amount falls within the above range, performance of a steam reforming catalyst, a partial-oxidation reforming catalyst, or an autothermal reforming catalyst can be fully attained, which is advantageous from an economical viewpoint. The nickel amount is more preferably 5 to 50 mass%, particularly preferably 10 to 30 mass%, in consideration of catalytic activity, cost, and other factors.
When a ruthenium-based catalyst is employed, the amount of ruthenium supported on the carrier is preferably 0.05 to 20 mass% on the basis of the amount of carrier. When the ruthenium amount falls within the above range, performance of a steam reforming catalyst, a partial-oxidation reforming catalyst, or an autothermal reforming catalyst can be fully attained, which is advantageous from an economical viewpoint. The ruthenium amount is more preferably 0.05 to 15 mass%, particularly preferably 0.1 to 2 mass%, in consideration of catalytic activity, cost, and other factors.

In reaction of steam reforming, the steam/carbon mole ratio (i.e., the ratio of steam to carbon originating from feedstock) is generally 1.5 to 10. When the steam/carbon mole ratio is 1.5 or higher, hydrogen can be formed in a sufficient amount, whereas when the ratio is 10 or lower, an excessive amount of steam is not required, and thermal loss is suppressed, ensuring high-efficiency hydrogen production. From the aforementioned viewpoints, the steam/carbon mole ratio is preferably 1.5 to 5, more preferably 2 to 4.
Preferably, steam reforming is performed at an inlet temperature of a steam reforming catalyst layer of 630°C or lower. When the inlet temperature is maintained at 630°C or lower, thermal decomposition of feedstock is prevented, and deposition of carbon on the catalyst or on the wall of a reactor tube by the mediation of carbon radicals is prevented. From the viewpoint, the inlet temperature of the steam reforming catalyst layer is more preferably 600°C or lower.
No particular limitation is imposed on the outlet temperature of a catalyst layer, but the outlet temperature preferably falls within a range of 650 to 800°C. When the outlet temperature is 650°C or higher, a sufficient amount of hydrogen is formed, whereas when the temperature is 800°C or lower, a reactor made of heat-resistant material is not required, which is preferred from economical viewpoint.

The reaction conditions typically employed in partial-oxidation reforming are as follows: pressure of ambient pressure to 5 MPa·G, temperature of 400 to 1,100°C, oxygen (O₂)/carbon mole ratio of 0.2 to 0.8, and liquid hourly space velocity (LHSV) of 0.1 to 100 h⁻¹.
The reaction conditions typically employed in autothermal reforming are as follows: pressure of ambient pressure to 5 MPa·G, temperature of 400 to 1,100°C, steam/carbon mole ratio of 0.1 to 10, oxygen (O₂)/carbon mole ratio of 0.1 to 1, liquid hourly space velocity (LHSV) of 0.1 to 2 h⁻¹, and gas hourly space velocity (GHSV) of 1,000 to 100,000 h⁻¹.
Notably, CO which is by-produced during the aforementioned steam reforming, partial-oxidation reforming, or autothermal reforming adversely affects formation of hydrogen. Therefore, the produced CO is preferably removed by converting to CO₂ through reaction. Thus, according to the process of the present invention, hydrogen for use in fuel cells can be effectively produced.

Fuel cell systems employing liquid feedstock generally include a feedstock-supplier, a desulfurizer, a reformer, and a fuel cell. Hydrogen produced through the process of the present invention is supplied to fuel cells. The fuel cell system of the present invention will next be described with reference to Fig. 1.
Fig. 1 shows a schematic diagram of an exemplary fuel cell system according to the present invention. As shown in Fig. 1, a fuel contained in a fuel tank 21 is fed to a desulfurizer 23 through a fuel pump 22. The fuel which has been desulfrized by the desulfurizer 23 is mingled with water fed from a water tank through a water pump 24, and the fuel mixture is fed to a carbureter 1 so as to gasify the mixture. Alternatively, the desulfurized fuel is gasified, followed by mixing with water. In either case, the fuel mixture is fed to a reformer 31. The aforementioned reforming catalyst has been charged into the reformer 31. Through any of the aforementioned reforming reactions, hydrogen is produced from a fuel mixture (gas mixture containing steam and hydrocarbon fuel) fed into the reformer 31.
The thus-produced hydrogen is transferred to a CO converter 32 (i.e., a CO-removing apparatus) and a CO-selective oxidation furnace 33 for reducing the CO concentration so as not to affect the characteristics of the produced fuel cell stack. Thus, according to the process of the present invention, hydrogen from which small amounts of C≥2 hydrocarbon compounds have been removed is fed to the fuel cell stack.

A fuel cell stack 34 is a polymer electrolyte fuel cell stack including a negative electrode 34A, a positive electrode 34B, and a polymer electrolyte 34C provided therebetween. The hydrogen-rich gas produced through the above process is fed to the negative electrode, while air is fed to the positive electrode through the air blower 35. If required, these gases undergo appropriate humidification (by means of a humidifier not illustrated) before introduction to the electrodes.
In the negative electrode, hydrogen dissociates to proton and electron, while in the positive electrode reaction of oxygen with electron and proton to form water occurs, whereby direct current is provided between the electrodes 34A and 34B. The negative electrode is formed from platinum black, a Pt-on-activated carbon catalyst, a Pt-Ru alloy catalyst, etc. The positive electrode is formed from platinum black, a Pt-on-activated carbon catalyst, etc.

When a burner 31A of the reformer 31 is connected with the negative electrode 34A, excess hydrogen may be used as a fuel. In a liquid/gas separator 36 connected with the positive electrode 34B, a discharge gas is separated from water which has been formed from oxygen and hydrogen contained in air fed to the positive electrode 34B. The separated water may be use for forming steam.
Notably, since the fuel cell stack 34 generates heat during electric power generation, the heat is recovered through provision of an exhausted heat recovering apparatus 37 so as to effectively use the recovered heat. The exhausted heat recovering apparatus 37 includes a heat-exchanger 37A for absorbing heat generated during reaction; a heat-exchanger 37B for transferring the heat absorbed in the heat exchanger 37A to water; a cooler 37C, and a pump 37D for circulating a cooling medium to the heat-exchangers 37A and 37B and the cooler 37C. Hot water obtained in the heat exchanger 37B may be effectively used in other facilities.

### Examples

The present invention will next be described in more detail by way of examples, which should not be construed as limiting the invention thereto. Desulfurizing agents produced in the Examples and Comparative Examples were evaluated through the following methods.

### [Evaluation methods]

### (1) Bulk density

Each desulfurizing agent was charged to a 5-cm³ measuring cylinder, and the mass of the agent was measured. The bulk density was calculated from volume and mass.

### (2) Pore volume

Each desulfurizing agent was maintained in vacuum at 200°C for three hours as a preliminary treatment. Nitrogen adsorption amount of the preliminarily treated agent was measured at a liquid nitrogen temperature. From the nitrogen adsorption isotherm, the total volume of pores having a radius of ≤100 nm) (corresponding to relative pressure of 0.990) was calculated. Pore volume of the desulfurizing agent was derived from the volume value.

### (3) Micropore surface area

Micropore surface area of each desulfurizing agent was obtained through subtracting the external surface area calculated from the t-plot from the total surface area (BET). The total surface area was calculated through the BET multipoint analysis of the N₂ adsorption isotherm within a relative pressure range of 0.01 to 0.3. In the t-plot analysis, relative pressure was transformed to thickness of adsorbing medium from the de Bore formula.

### (4) External surface area

External surface area of each desulfurizing agent was calculated from the slope of the linear region (on the high pressure side) of the t-plot, which had been obtained through analysis of the N₂ adsorption isotherm.

### (5) kerosene desulfurization test

Each (15 mL) of the desulfurizing agents produced in the Examples and Comparative Examples was charged into a SUS reactor tube (inner diameter: 17 mm). The agent was heated to 120°C under a stream of hydrogen gas and ambient pressure, and maintained at 120°C for 30 minutes. Thereafter, the agent was heated to 300°C over one hour and maintained at 300°C for three hours, to thereby activate the desulfurizing agent. Subsequently, the temperature was lowered to 200°C, and maintained at 200°C. Kerosene of JIS No. 1, having characteristics shown in Table 1, was caused to pass through the reactor tube under ambient pressure at a liquid hourly space velocity (LHSV) of 20 hr⁻¹, which is an LHSV employed in an accelerated service life test about 100 times the LHSV employed in an actually operated fuel cell system. Thirty hours after the start of the test, sulfur concentration of the kerosene sample was determined, whereby desulfurization performance was evaluated.

[Table 1]

**Table 1**

| | | |
|---|---|---|
| | Initial boiling point | 153 |
| | temp.10% Recovered | 176 |
| Distillation characteristics (°C) | temp.30% Recovered | 194 |
| | temp.50% Recovered | 209 |
| | temp.70% Recovered | 224 |
| | temp.90% Recovered | 249 |
| | End point | 267 |
| Sulfur content (mass ppm) | | 48 |

### Example 1

Nickel sulfate hexahydrate (special grade, Wako Pure Chemical Industries, Ltd.) (360.1 g) and copper sulfate pentahydrate (special grade, Wako Pure Chemical Industries, Ltd.) (85.2 g) were dissolved in ion-exchange water (3 L) heated at 80°C, to thereby form a liquid preparation A. Sodium carbonate (300.0 g) was dissolved in separately provided ion-exchange water (3 L) heated at 80°C, and water glass (JIS No. 3, Si concentration of 29 mass%, product of The Nippon Chemical Industrial Co., Ltd.) (135.5 g) was added to the liquid preparation A, to thereby form a liquid preparation B.
While the liquid temperatures were maintained at 80°C, the liquid preparations A and B were fed to a stainless steel reactor tube (inner diameter: 10 mm, length: 10 cm), and a cake of precipitates were allowed to be formed. The precipitated cake was washed with ion-exchange water (100 L) by use of a filter, and the product was dried at 120°C for 12 hours by use of a blower-type drier. The dried product was pulverized by means of an agate mortar, to thereby form a powder having a mean particle size of 0.8 mm, and the powder was calcined at 350°C for three hours, to thereby yield desulfurizing agent a.
The yielded desulfurizing agent a was found to have a nickel content (as reduced to NiO) of 60.0 mass%, a copper content (as reduced to CuO) of 15.0 mass%, and a silicon content (as reduced to SiO₂) of 25.0 mass%. When the nickel content and copper content are reduced to metallic elements, the values correspond to a nickel content (as reduced to Ni) of 56.0 mass%, a copper content (as reduced to Cu) of 14.0 mass%, and a silicon content (as reduced to SiO₂) of 30.0 mass%. The desulfurizing agent a was evaluated through the aforementioned methods. Table 2 shows the results.

### Comparative Example 1

Liquid preparations A and B were formed through the same procedure as employed in Example 1. While the liquid temperatures were maintained at 80°C, the liquid preparation B was added dropwise to the liquid preparation A over 10 minutes, and precipitates in the cake form were allowed to be formed. The precipitated cake was washed with ion-exchange water (100 L) by use of a filter, and the product was dried at 120°C for 12 hours by use of a blower-type drier. The dried product was pulverized by means of an agate mortar, to thereby form a powder having a mean particle size of 0.8 mm, and the powder was calcined at 350°C for three hours, to thereby yield desulfurizing agent b.
The yielded desulfurizing agent b was found to have a nickel content (as reduced to NiO) of 60.0 mass%, a copper content (as reduced to CuO) of 15.0 mass%, and a silicon content (as reduced to SiO₂) of 25.0 mass%. The desulfurizing agent b was evaluated through the aforementioned methods. Table 2 shows the results.

### Example 2

The procedure of Example 1 was repeated, except that nickel sulfate hexahydrate (444.5 g), no copper sulfate pentahydrate, and water glass (108.4 g) were employed, to thereby yield desulfurizing agent c having a mean particle size of 0.8 mm.
The yielded desulfurizing agent c was found to have a nickel content (as reduced to NiO) of 80.0 mass%, a copper content (as reduced to CuO) of 0 mass%, and a silicon content (as reduced to SiO₂) of 20.0 mass%. The desulfurizing agent c was evaluated through the aforementioned methods. Table 2 shows the results.

### Example 3

The procedure of Example 1 was repeated, except that nickel sulfate hexahydrate (438.9 g), copper sulfate pentahydrate (5.3 g), and water glass (108.4 g) were employed, to thereby yield desulfurizing agent d having a mean particle size of 0.8 mm.
The yielded desulfurizing agent d was found to have a nickel content (as reduced to NiO) of 79.0 mass%, a copper content (as reduced to CuO) of 1.0 mass%, and a silicon content (as reduced to SiO₂) of 20.0 mass%. The desulfurizing agent d was evaluated through the aforementioned methods. Table 2 shows the results.

### Example 4

The procedure of Example 1 was repeated, except that nickel sulfate hexahydrate (438.9 g), copper sulfate pentahydrate (10.7 g), and water glass (108.4 g) were employed, to thereby yield desulfurizing agent e having a mean particle size of 0.8 mm.
The yielded desulfurizing agent e was found to have a nickel content (as reduced to NiO) of 78.0 mass%, a copper content (as reduced to CuO) of 2.0 mass%, and a silicon content (as reduced to SiO₂) of 20.0 mass%. The desulfurizing agent e was evaluated through the aforementioned methods. Table 2 shows the results.

### Example 5

The procedure of Example 1 was repeated, except that nickel sulfate hexahydrate (405.1 g), copper sulfate pentahydrate (42.6 g), and water glass (108.4 g) were employed, to thereby yield desulfurizing agent f having a mean particle size of 0.8 mm.
The yielded desulfurizing agent f was found to have a nickel content (as reduced to NiO) of 72.0 mass%, a copper content (as reduced to CuO) of 8.0 mass%, and a silicon content (as reduced to SiO₂) of 20.0 mass%. The desulfurizing agent f was evaluated through the aforementioned methods. Table 2 shows the results.

### Example 6

The procedure of Example 1 was repeated, except that nickel sulfate hexahydrate (478.3 g), copper sulfate pentahydrate (26.5 g), and water glass (54.2 g) were employed, to thereby yield desulfurizing agent g having a mean particle size of 0.8 mm.
The yielded desulfurizing agent g was found to have a nickel content (as reduced to NiO) of 85.0 mass%, a copper content (as reduced to CuO) of 5.0 mass%, and a silicon content (as reduced to SiO₂) of 10.0 mass%. The desulfurizing agent g was evaluated through the aforementioned methods. Table 2 shows the results.

### Example 7

The procedure of Example 1 was repeated, except that nickel sulfate hexahydrate (422.1 g), copper sulfate pentahydrate (26.5 g), and water glass (108.4 g) were employed, to thereby yield desulfurizing agent h having a mean particle size of 0.8 mm.
The yielded desulfurizing agent h was found to have a nickel content (as reduced to NiO) of 75.0 mass%, a copper content (as reduced to CuO) of 5.0 mass%, and a silicon content (as reduced to SiO₂) of 20.0 mass%. The desulfurizing agent h was evaluated through the aforementioned methods. Table 2 shows the results.

### Example 8

The procedure of Example 1 was repeated, except that nickel sulfate hexahydrate (365.8 g), copper sulfate pentahydrate (26.5 g), and water glass (162.6 g) were employed, to thereby yield desulfurizing agent i having a mean particle size of 0.8 mm.
The yielded desulfurizing agent i was found to have a nickel content (as reduced to NiO) of 65.0 mass%, a copper content (as reduced to CuO) of 5.0 mass%, and a silicon content (as reduced to SiO₂) of 30.0 mass%. The desulfurizing agent i was evaluated through the aforementioned methods. Table 2 shows the results.

### Comparative Example 2

The procedure of Example 1 was repeated, except that nickel sulfate hexahydrate (196.9 g), copper sulfate pentahydrate (26.5 g), and water glass (325.2 g) were employed, to thereby yield desulfurizing agent j having a mean particle size of 0.8 mm.
The yielded desulfurizing agent j was found to have a nickel content (as reduced to NiO) of 35.0 mass%, a copper content (as reduced to CuO) of 5.0 mass%, and a silicon content (as reduced to SiO₂) of 60.0 mass%. The desulfurizing agent j was evaluated through the aforementioned methods. Table 2 shows the results.

### Comparative Example 3

Nickel sulfate hexahydrate (special grade, Wako Pure Chemical Industries, Ltd.) (365.8 g) and copper sulfate pentahydrate (special grade, Wako Pure Chemical Industries, Ltd.) (26.5 g) were dissolved in ion-exchange water (3 L) heated at 80°C. To the formed solution, pseudo-boehmite (Cataloid-AP, Al₂O₃ content: 67 mass%, product of CATALYSTS & CHEMICALS INDUSTRIES CO., LTD.) (10.8 g) was added, to thereby prepare a liquid preparation C. Sodium carbonate (300.0 g) was dissolved in separately provided ion-exchange water (3 L) heated at 80°C, and water glass (JIS No. 3, Si concentration of 29 mass%, product of The Nippon Chemical Industrial Co., Ltd.) (140.4 g) was added to the liquid preparation C, to thereby form a liquid preparation D.
The formation of desulfurizing agent employed in Example 1 was repeated, except that the liquid preparations C and D were employed instead of the liquid preparation A and B, to thereby yield desulfurizing agent k having a mean particle size of 0.8 mm.
The yielded desulfurizing agent k was found to have a nickel content (as reduced to NiO) of 65.0 mass%, a copper content (as reduced to CuO) of 5.0 mass%, and a silica-alumina content of 30.0 mass%. The desulfurizing agent k was evaluated through the aforementioned methods. Table 2 shows the results.

[Table 2]

**Table 2-1**

| | Desulfurizing agent | Bulk density (g/cm³) | Pore volume (mL/g) | Micropore surface area (m²/g) | External surface area (m²/g) | Ni content [as NiO] (mass%) | Cu content [as CuO] (mass%) |
|---|---|---|---|---|---|---|---|
| Ex. 1 | a | 1.25 | 0.310 | 234 | 75 | 60.0 | 15.0 |
| Ex. 2 | c | 1.52 | 0.265 | 232 | 55 | 80.0 | 0.0 |
| Ex. 3 | d | 1.48 | 0.212 | 227 | 38 | 79.0 | 1.0 |
| Ex. 4 | e | 1.41 | 0.246 | 234 | 45 | 78.0 | 2.0 |
| Ex. 5 | f | 1.28 | 0.251 | 178 | 68 | 72.0 | 8.0 |
| Ex. 6 | g | 1.65 | 0.231 | 183 | 35 | 85.0 | 5.0 |
| Ex. 7 | h | 1.50 | 0.252 | 201 | 61 | 75.0 | 5.0 |
| Ex. 8 | i | 1.35 | 0.271 | 211 | 91 | 65.0 | 5.0 |
| Comp. Ex. 1 | b | 0.75 | 0.480 | 181 | 131 | 60.0 | 15.0 |
| Comp. Ex. 2 | j | 0.95 | 0.420 | 201 | 107 | 35.0 | 5.0 |
| Comp. Ex. 3 | k | 1.12 | 0.381 | 225 | 105 | 65.0 | 5.0 |

[Table 3]

**Table 2-2**

| | Desulfurizing agent | Carrier | | Mean particle size (mm) | Evaluation conditions | | Evaluation results |
|---|---|---|---|---|---|---|---|
| | | Type | Content (mass%) | | Fuel | LHSV (h⁻¹) | Desulfurization performance (mass ppm) |
| Ex. 1 | a | Silica | 25.0 | 0.8 | Kerosene | 20 | 0.8 |
| Ex. 2 | c | Silica | 20.0 | 0.8 | Kerosene | 20 | 1.8 |
| Ex. 3 | d | Silica | 20.0 | 0.8 | Kerosene | 20 | 0.8 |
| Ex. 4 | e | Silica | 20.0 | 0.8 | Kerosene | 20 | 0.5 |
| Ex. 5 | f | Silica | 20.0 | 0.8 | Kerosene | 20 | 0.6 |
| Ex. 6 | g | Silica | 10.0 | 0.8 | Kerosene | 20 | 0.5 |
| Ex. 7 | h | Silica | 20.0 | 0.8 | Kerosene | 20 | 0.4 |
| Ex. 8 | i | Silica | 30.0 | 0.8 | Kerosene | 20 | 1.0 |
| Comp. Ex. 1 | b | Silica | 25.0 | 0.8 | Kerosene | 20 | 29.5 |
| Comp. Ex. 2 | j | Silica | 60.0 | 0.8 | Kerosene | 20 | 18.5 |
| Comp. Ex. 3 | k | Silica-Alumina | 30.0 | 0.8 | Kerosene | 20 | 7.4 |

### Industrial Applicability

The desulfurizing agent of the present invention attains effective removal of sulfur from a hydrocarbon feedstock and/or an oxygen-containing hydrocarbon feedstock so as to attain a considerably low sulfur level, and exhibits satisfactory desulfurization performance despite a relatively small volume of use. Therefore, when the desulfurization of the invention is employed in a typical fuel cell system having a feedstock feeder, a desulfurizer, a reformer, and a fuel cell, the dimensions of the desulfurizer can be reduced. In addition, since the desulfurizing agent of the present invention has a long service life, activity of a catalyst employed in the reformer can be maintained at high level for a long period of time, whereby hydrogen for fuel cells can be effectively produced.

## Claims

1. A desulfurizing agent for removing a sulfur compound from a hydrocarbon feedstock and/or an oxygen-containing hydrocarbon feedstock, **characterized in that** the agent comprises nickel, or a combination of nickel and copper, and silicon, and has a bulk density of 0.95 to 2.0 g/cm³, a pore volume of 0.10 to 0.40 mL/g, a micropore surface area of 100 to 250 m²/g, and an external surface area of 100 m²/g or less.

2. The desulfurizing agent as described in claim 1, which has a nickel content of 40 to 90 mass%.

3. The desulfurizing agent as described in claim 1, which has a copper content of 0.01 to 40 mass%.

4. The desulfurizing agent as described in claim 1, which has a silicon content, as reduced to SiO₂ (silica), of 50 mass% or less.

5. The desulfurizing agent as described in claim 1, wherein the hydrocarbon feedstock and/or oxygen-containing hydrocarbon feedstock is at least one species selected from among kerosene, light oil, liquefied petroleum gas (LPG), naphtha, gasoline, natural gas, and dimethyl ether.

6. A method for producing a desulfurizing agent which has a bulk density of 0.95 to 2.0 g/cm³, a pore volume of 0.10 to 0.40 mL/g, a micropore surface area of 100 to 250 m²/g, and an external surface area of 100 m²/g or less, the method comprising mixing an acidic solution or an acidic aqueous dispersion containing nickel or a combination of nickel and copper with a basic solution containing silicon, and allowing instant formation precipitates.

7. The method for producing a desulfurizing agent as described in claim 6, wherein mixing of the acidic solution or acidic aqueous dispersion with the basic solution, and formation of the precipitates are performed in a reactor tube having an inner diameter of 3 to 100 mm.

8. A desulfurization method **characterized by** comprising desulfurizing a hydrocarbon feedstock and/or oxygen-containing hydrocarbon feedstock by use of a desulfurizing agent as recited in any of claims 1 to 5 above at -40 to 300°C.

9. A process for producing hydrogen for fuel cells, **characterized in that** the process comprises desulfurizing a hydrocarbon feedstock and/or oxygen-containing hydrocarbon feedstock by use of a desulfurizing agent as recited in any of claims 1 to 5 and, subsequently, reforming the desulfurization product.

10. The process for producing hydrogen for fuel cells as described in claim 9, wherein reforming is performed through steam reforming, partial-oxidation reforming, or autothermal reforming.

11. The process for producing hydrogen for fuel cells as described in claim 9 or 10, wherein reforming is performed in the presence of a catalyst which is a ruthenium-based catalyst or a nickel-based catalyst.

12. The process for producing hydrogen for fuel cells as described in claim 11, wherein the catalyst employed in reforming has a carrier component which is at least one species selected from among manganese oxide, cerium oxide, and zirconium oxide.

13. A fuel cell system **characterized by** employing hydrogen produced through a process as recited in any of claims 9 to 12.
